Europäisches Patentamt

European Patent Office

Office européen des brevets

(11) Veröffentlichungsnummer: 0 216 013

A2

# (12) EUROPÄISCHE PATENTANMELDUNG

(21) Anmeldenummer: 86107306.2

(22) Anmeldetag: 29.05.86

(51) Int. Cl.⁴: H01H 50/44

(30) Priorität: 26.07.85 DE 3526765

(43) Veröffentlichungstag der Anmeldung:
01.04.87 Patentblatt 87/14

(84) Benannte Vertragsstaaten:
AT BE CH FR GB IT LI NL SE

(71) Anmelder: Hengstler Bauelemente GmbH
Postfach 1249
D-7209 Wehingen(DE)

(72) Erfinder: Hermle, Heinrich, Dipl.-Ing.
Wörthstrasse 38
D- 7209 Wehingen(DE)

(74) Vertreter: Riebling, Günter, Dr. et al
Patentanwälte Dr.-Ing., Dipl.-Ing., Ing.(grad)
Günter Riebling Dr.-Ing., Dipl.-Ing. Peter
Riebling Rennerle 10 Postfach 3160
D-8990 Lindau (Bodensee)(DE)

(54) Relais für die Einschaltung im Teilnehmerstromkreis einer Fernsprech-Vermittlungseinrichtung.

(57) Das Relais für die Einschaltung im Teilnehmer-Stromkreis einer Fernsprech-Vermittlungseinrichtung weist in seinem Gehäuse eine Wicklung auf, die aus zwei gegensätzlich gewickelten Spulen besteht, die im Teilnehmer-Stromkreis symmetrisch zum Gabelumschalter angeordnet sind. Weil sich die beiden Spulen gegenseitig in ihrer Feldstärke ergänzen, reicht es aus, jede Spule mit einem Widerstand von 5 Ohm auszustatten und bei einem kleinstmöglichen Schleifenstrom von 17 Milliampere noch eine zuverlässige Schaltung des Kontaktes zu erreichen. Ein derartiges Relais im Teilnehmer-Stromkreis kann damit auch für neuartige Netzsysteme mit der Kurzbezeichnung ISDN als Schleifenüberwachungsorgan in Verbindung mit neuartigen Apparateanschluß-schnüren erhöhten Widerstandes eingesetzt werden.

FIG 1

EP 0 216 013 A2

## Relais für die Einschaltung im Teilnehmerstromkreis einer Fernsprech-Vermittlungseinrichtung

Die Erfindung betrifft ein Relais nach dem Oberbegriff des Patentanspruchs 1. Ein derartiges Relais in in vielfältigen Ausführungsformen bekannt geworden, wobei für alle Ausführungsformen charakteristisch ist, daß das Relais eine einzige Spule aufweist, die im Teilnehmer-Stromkreis eingeschaltet ist. Ferner ist im Teilnehmer-Stromkreis der Gabelumschalter eingeschaltet, wobei der Gabelumschalter den Teilnehmer-Stromkreis symmetrisch unterteilt, d.h., stromaufwärts und stromabwärts des Gabelumschalters sind gleiche Leitungsstrecken vorhanden. Mit der Einschaltung der einzigen Spule der bekannten Relais wird jedoch dieser symmetrische Teilnehmerstromkreis unsymmetrisch, denn diese einzige Spule kann entweder nur stromaufwärts oder stromabwärts des Gabelumschalters eingeschaltet werden. Es kommt daher verstärkt zu Reflektionen und zu einem vermehrten Übersprechen. Gewöhnlich hat die Spule des bekannten Relais 20 Ohm Spulenwiderstand und ist deshalb in neuartigen Netzsystemen der Deutschen Bundespost mit der Kurzbezeichnung ISDN (Integrated Services Digital Network). Bei Einführung dieses Systems werden in jeder ISDN-Anschlußdose und in den meisten Zusatzeinrichtungen Schleifen-Überwachungsorgane benötigt. Durch die Einführung einer neuen Apparate-Anschlußschnur mit um 10 Ohm höherem Eigenwiderstand ist das bisher in Zusatzgeräten und Nebenstellen-Anlagen verwendete Relais mit 20 Ohm Spulenwiderstand und mit einer einzigen Wicklung nicht mehr einsetzbar. Der Erfindung liegt demzufolge die Aufgabe zugrunde, ein Relais für die Einschaltung im Teilnehmer-Stromkreis einer Fernsprech-Vermittlungseinrichtung nach dem Oberbegriff des Anspruches 1 so weiterzubilden, daß es zu einer absolut symmetrischen Einschaltung des Relais in den Teilnehmerstromkreis kommt und daß ein solches Relais auch mit Anschlußschnüren erhöhten Widerstandes verwendbar ist.

Zur Lösung der gestellten Aufgabe ist die Erfindung dadurch gekennzeichnet, daß das Relais in seinem Gehäuse eine Wicklung, bestehend aus zwei gegensätzlich gewickelten Spulen, aufweist, die im Teilnehmerstromkreis symmetrisch zum Gabelumschalter angeordnet sind.

Wesentliches Merkmal der vorliegenden Erfindung ist also, daß sowohl stromaufwärts des Gabelumschalters als auch stromabwärts des Gabelumschalters jeweils eine Spule dieses Relais angeordnet ist und daß beide Spulen gleichsinnig von Strom durchflossen sind, so daß die magnetischen Feldwirkungen beider Spulen sich addieren und das von beiden Spulen additiv erzeugte magnetische Feld beispielsweise auf einem Reed-Kontakt wirkt. Mit dieser besonderen Schaltungsart wird also eine absolut symmetrische Einschaltung des Relais im Teilnehmerstromkreis erreicht und das vorher vorhandene, verschlechterte elektrische Verhalten durch unsymmetrische Einschaltung einer einzigen Spule wird vermieden.

Dadurch, daß zwei Spulen vorhanden sind, die sich gegenseitig additiv ergänzen, reicht es aus, jede Spule mit einem Widerstand von 5 Ohm auszubilden und es wird damit erreicht, daß trotzdem bei einem kleinstmöglichen Schleifenstrom von 17 Milliampere eine zuverlässige Schaltung des Kontaktes gewährleistet ist.

Statt also eines bekannten Relais mit 20 Ohm Spulenwiderstand werden nun zwei Spulen mit je 5 Ohm Widerstand verwendet, so daß es mit dieser besonderen Schaltung möglich ist, im Teilnehmerstromkreis Apparate-Anschlußschnüre mit um 10 Ohm höherem Eigenwiderstand zu verwenden.

Eine besonders betriebssichere Ausbildung des erfindungsgemäßen Schleifen-Überwachungsrelais ergibt sich dann, wenn die Anschlüsse des Relais bezüglich der Kontakte und die Anschlüsse des Relais bezüglich der Spulen so aus der Bodenfläche des Gehäuses dieses Relais herausgeführt sind, daß unabhängig von der Steckrichtung des Relais in zugeordnete Aufnahmekontakte stets die richtigen Anschlußpunkte mit den richtigen Aufnahmekontakten verbunden sind. Das heißt, bezüglich einer gedachten Längsachse des Relais kann dieses entweder in der einen Richtung in die zugeordneten Aufnahmekontakte eines Sockels eingesteckt werden, oder das Relais kann in der gleichen Ebene um 180° gedreht werden und wiederum in die Aufnahmekontakte eingesteckt werden, wobei stets durch interne Verschaltung der Anschlüsse im Relais dafür gesorgt ist, daß die Anschlüsse des Kontaktes stets mit den zugehörigen Aufnahmekontakten verbunden sind und die Anschlüsse der Spulen stets mit den zugeordneten Anschlüssen des Teilnehmerstromkreises verbunden sind.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen offenbarten Angaben und Merkmale, insbesondere die in den Zeichnungen dargestellte räumliche Ausbildung werden als erfindungswesentlich beansprucht, soweit sie einzeln oder in Konbination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:

Figur 1: schematisiert im Ersatzschaltbild ein Relais nach der Erfindung mit Draufsicht auf die Bodenplatte;

Figur 2: Seitenansicht des Gehäuses des Relais in Pfeilrichtung II nach Figur 1;

Figur 3: elektrisches Schaltbild eines Teilnehmerstromkreises;

Figur 4: ein praktisches Ausführungsbeispiel eines Relais nach Figur 1 und 2 in der Draufsicht auf die Bodenplatte.

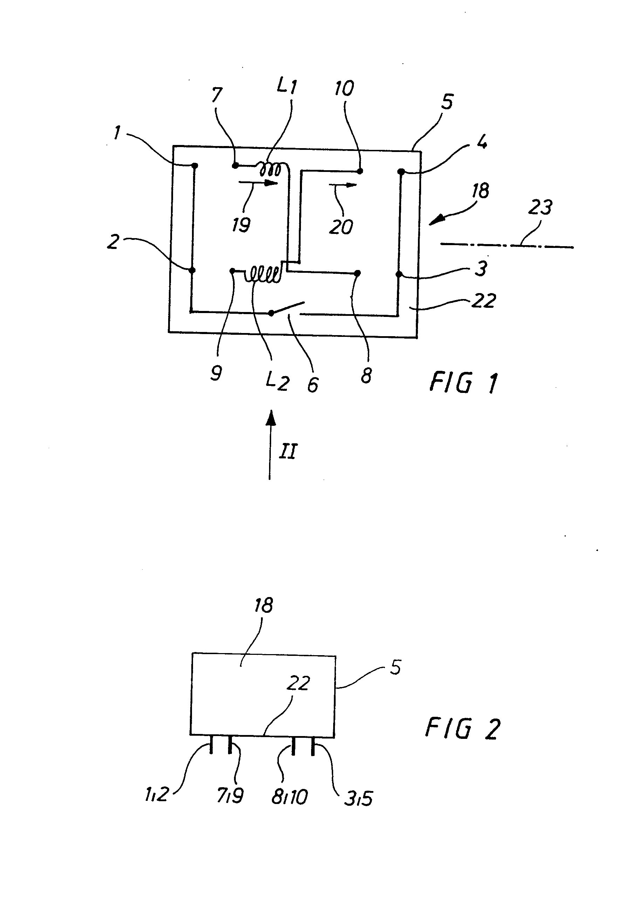

Bei dem Relais 18 nach Figur 1 sind auf eine Bodenplatte 22 die Anschlüsse 1 bis 4 des Kontaktes 6 und die Anschlüsse 7 bis 10 der beiden Spulen L1 und L2 angeordnet. Wie in Figur 1 erkennbar, sind die Anschlüsse 1 und 2 des Kontaktes 6 miteinander verbunden und liegen genau symmetrisch zur Längsmittenachse der Bodenplatte 22 den gegenüberliegenden Anschlüssen 3 und 4 gegenüber, die ebenfalls miteinander verbunden sind und mit dem anderen Teil des Kontaktes 6 verbunden sind. Hieraus ergibt sich, daß unabhängig von der Einsteckrichtung (die um 180° verdreht werden kann) stets die Anschlüsse 1 bis 4 in richtiger Weise mit dem Kontakt 6 verschaltet sind.

Die eine Spule L1 geht vom Anschluß 7 aus und wird in Pfeilrichtung 19 vom Strom durchflossen. Der gegenüberliegende Anschluß 8 ist unter - schräg gegenüber dem Anschluß 7 angeordnet.

Die zweite Spule L2 geht mit ihrem einen Ende vom Anschluß 10 aus, der bezüglich der Längsmittenachse der Bodenplatte 22 genau symmetrisch dem Anschluß 8 gegenüber liegt. Die Spule L2 wird in Pfeilrichtung 20 vom Strom durchflossen, wobei der andere Anschluß 9 wiederum dem Anschluß 7 genau symmetrisch bezüglich der Längsmittenachse der Bodenplatte 22 gegenüber liegt. Die Längsmittenachse ist mit dem Bezugszeichen 23 als strichpunktierte Linie in Figur 1 eingetragen.

Figur 2 zeigt die Seitenansicht des Gehäuses 5 des Relais 18, aus der sich ergibt, daß die Anschlüsse 1,2; 7,9; 8,10; 3,5 beispielsweise in Form von Anschlußdrähten aus der Bodenplatte 22 herausgeführt sind.

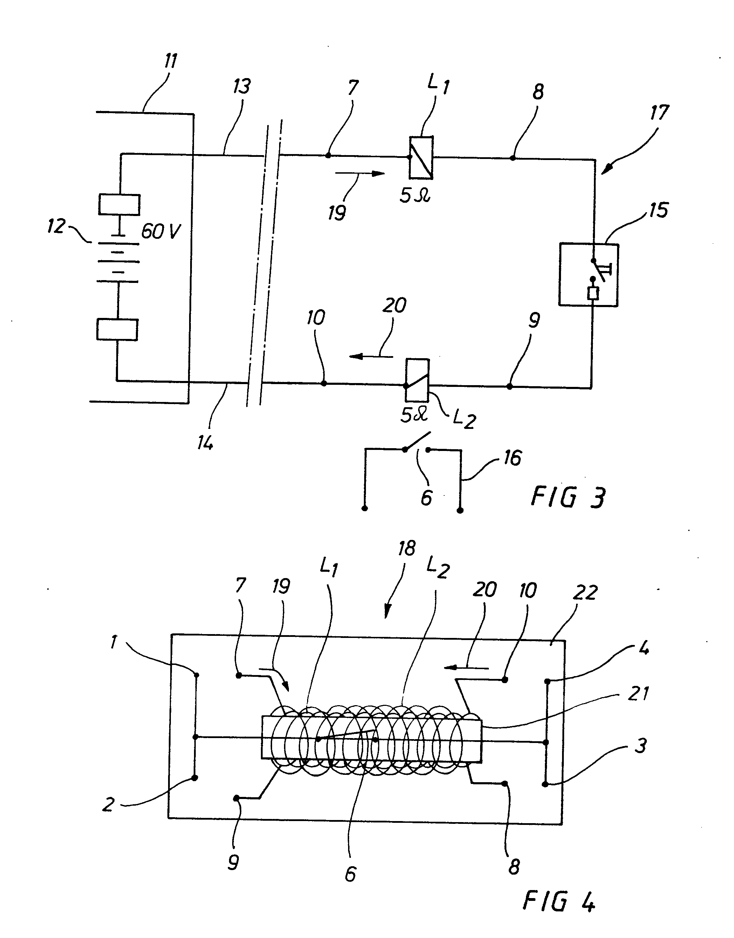

Die Figur 3 zeigt einen Teilnehmerstromkreis 17, der im wesentlichen aus einer in der Vermittlungsstelle 11 angeordneten Amtsbatterie 12 besteht, die über die Leitungen 13, 14 mit dem Teilnehmerstromkreis 17 verbunden ist. Mittig im Teilnehmerstromkreis 17 ist der Gabelumschalter 15 angeordnet und stromaufwärts dieses Gabelumschalters 15 ist die eine Spule L1 mit ihren Anschlüssen 7,8 eingeschaltet, die damit in Pfeilrichtung 19 vom Strom durchflossen wird.

Stromabwärts des Gabelumschalters 15 ist die Spule L2 mit ihren Anschlüssen 10,9 eingeschaltet, die in Pfeilrichtung 20 geschlossen wird, wobei die beiden Spulen L1 und L2 sich gegenseitig ergänzen und dadurch mit einer sich addierenden Feldstärke auf den Kontakt 6 wirken, der in einem nicht näher dargestellten Stromkreis 16 eingeschaltet ist.

Die Figur 4 zeigt ein praktisches Ausführungsbeispiel eines Relais 18 in Form eines Reed-Kontaktes, wobei auf der Bodenplatte 22 der Reed-Kontakt in Form einer Glasröhre 21 angeordnet ist, in der der magnet-empfindliche Kontakt 6 luftdicht eingeschmolzen ist. Die Glasröhre 21 wird von den beiden gegensätzlich gewickelten Spulen L1 und L2 umgeben, so daß erkennbar ist, daß entsprechend der eingezeichneten Stromrichtungen in den Pfeilrichtungen 19,20 eine additive Feldstärkenwirkung auf den magnetempfindlichen Kontakt 6 zustande kommt.

Ein bevorzugtes Anwendungsbeispiel der vorliegenden Erfindung liegt in der Verwendung des Relais in einer sogenannten ISDN-Steckdose. Kennzeichen einer solchen Steckdose ist, daß mehrere Teilnehmer (z.B. Fernschreiber, Fernsprecher, BTX-System) auf ein gemeinsames Bus-System arbeiten. Hierbei muß durch das Schleifenüberwachungsorgan (Relais 18) sichergestellt werden, daß -wenn ein Teilnehmer auf den Bus arbeitet -alle anderen Teilnehmer stumm bleiben und nicht auf den Bus Zugriff haben.

## ZEICHNUNGS-LEGENDE

1 Anschluß
2 Anschluß
3 Anschluß
4 Anschluß
5 Gehäuse Spule L1
6 Kontakt Spule L2
7 Anschluß
8 Anschluß
9 Anschluß
10 Anschluß
11 Vermittlungsstelle
12 Amtsbatterie
13 Leitung
14 Leitung
15 Gabelumschalter
16 Stromkreis
17 Teilnehmerstromkreis
18 Relais
19 Pfeilrichtung

20 Pfeilrichtung
21 Glasröhre
22 Bodenplatte
23 Längsmittenachse

## Ansprüche

1. Relais für die Einschaltung im Teilnehmer-stromkreis (17) einer Fernsprech-Vermittlungsein-richtung, die im wesentlichen aus einer in der Vermittlungsstelle (11) angeordneten Amtsbatterie - (12) besteht, welche die Stromversorgung für den Teilnehmerstromkreis (17) bildet, in welchem mindestens die Spule des Relais (18) und der Gabelumschalter (15) angeordnet sind, **dadurch gekennzeichnet,** daß das Relais (18) in seinem Gehäuse (5) eine Wicklung, bestehend aus zwei gegensätzlich gewickelten Spulen (L1, L2), aufweist, die im Teilnehmerstromkreis (17) symmetrisch zum Gabelumschalter (15) angeordnet sind.

2. Relais nach Anspruch 1, **dadurch gekennzeichnet,** daß die zwei Spulen (L1, L2) in entgegengesetztem Wicklungssinn auf einen Reedkontakt (6,21) aufgewickelt sind.

3. Relais nach Anspruch 1, **dadurch gekennzeichnet,** daß die Anschlüsse (1-4) des Kontaktes (6) und die Anschlüsse (7-10) der Spulen (L1, L2) symmetrisch so aus der Bodenfläche des Gehäuses (5) des Relais (18) geführt sind, daß vom Einstecken des Relais (18) in zugeordnete Aufnahmekontakte stets die gleiche Verschaltung der Anschlüsse (1-4 und 7-10) gewährleistet ist.

4. Relais nach Anspruch 1, **dadurch gekennzeichnet,** daß jede Spule einen ohmschen Widerstand von 5 Ohm aufweist.

FIG 1

FIG 2

FIG 3

FIG 4